# EUROPÄISCHE PATENTSCHRIFT

(11) **EP 0 850 391 B1**
(45) Veröffentlichungstag und Bekanntmachung des Hinweises auf die Patenterteilung: **02.02.2000**
(21) Anmeldenummer: 96943853.0
(22) Anmeldetag: 05.09.1996
(51) Int. Cl.: F25B 15/06, F25B 27/00

(54) **ABSORPTIONSKÄLTEMASCHINE UND VERFAHREN ZU DEREN BETRIEB**
ABSORPTION REFRIGERATING MACHINE AND PROCESS FOR THE OPERATION THEREOF
MACHINE FRIGORIFIQUE A ABSORPTION ET SON PROCEDE DE FONCTIONNEMENT

(30) Priorität: 15.09.1995 DE 19535840
(43) Veröffentlichungstag der Anmeldung: 01.07.1998
(73) Patentinhaber: FRAUNHOFER-GESELLSCHAFT ZUR FÖRDERUNG DER ANGEWANDTEN FORSCHUNG E.V., 80636 München (DE)
(72) Erfinder: DIETZ, Bernhard, D-44139 Dortmund (DE); KUNKEL, Roland, D-45130 Essen (DE); NOERES, Peter, D-45881 Gelsenkirchen (DE)
(86) Internationale Anmeldenummer: DE9601689
(87) Internationale Veröffentlichungsnummer: WO9711322

(56) Entgegenhaltungen:
- DE-A- 2 528 121
- DE-A- 2 540 158
- DE-A- 2 719 995
- DE-A- 2 900 388
- DE-B- 1 029 398
- FR-A- 1 263 393
- GB-A- 1 208 467
- US-A- 2 713 778
- US-A- 2 795 115
- US-A- 3 643 455
- US-A- 3 695 052
- US-A- 5 038 574

## Beschreibung

Die Erfindung betrifft eine Absorptionskältemaschine nach dem Oberbegriff des Anspruchs 1 und ein Verfahren zu deren Betrieb. Die Anwendung kann als Haushaltskühlgerät, beispielsweise als letztes Glied der Kältekette, beziehungsweise zur Medikamentenkühlung oder als Kühlaggregat einer Klimaanlage eingesetzt werden, wobei die Verwendung in einer Inselvariante ohne einen Elektroenergieanschluß möglich ist.

Bei Sorptionskältemaschinen ist es bekannt, daß Gase oder Dämpfe unter bestimmten Bedingungen an einen anderen Stoff (Lösungsmittel) gebunden und unter anderen Bedingungen wieder ausgetrieben werden können. Die "Verdichtung" erfolgt durch die Anlagerung eines reinen Kältemittels an einen teilweise in einem zweiten Kreislauf geführten Stoff. Die diesem System zugeführte Energie wird dazu verwendet, daß das Kältemittel von dem zweiten Medium getrennt wird. Die Wärme, die bei der Anlagerung frei wird, kann an die Umgebung abgeführt werden, während die Energie für den Trennungsvorgang als Heizwärme aufgenommen wird. Eine solche Kältemaschine hat den Vorteil, daß keine beweglichen Teile verwendet werden müssen, die einem Verschleiß unterliegen bzw. Geräusche verursachen. Nachteilig ist es jedoch, daß diese Maschinen gegenüber den bekannten Kompressionsmaschinen einen schlechteren Wirkungsgrad aufweisen.

Eine besondere Ausführungsform solcher Kältemaschinen sind Absorptionskältemaschinen, bei denen das aus Kältemittel und Lösungsmittel bestehende Gemisch in einen Rektifikator oder Austreiber eingespeist und durch Zuführung von Wärme zum Sieden gebracht wird. Der so ausgetriebene Kältemitteldampf wird in einem Kondensator niedergeschlagen und die dort entstehende Flüssigkeit kühlt sich beim Entspannen im Verdampfer stark ab. Bei der Verdampfung wird Wärme aus dem Kühlgut aufgenommen. Der entstandene Dampf strömt in einen Absorber, in dem auch die Restflüssigkeit aus dem Rektifikator entspannt wird. Diese Restflüssigkeit rieselt durch den Dampf und absorbiert ihn dabei. Die entstehende Absorptionswärme wird an die Umgebung abgeführt. Die aus Kälte- und Lösemittel gebildete Mischung wird wiederum in den Rektifikator geführt und anschließend mit der erneuten Trennung der Kreislauf geschlossen.

Weitere Nachteile der bekannten Absorptionskältemaschinen sind zwischen Austreiber und Kondensator auftretende Druckverluste, die unvollkommene Rektifikation (das durch Kondensator und Verdampfer strömende Kältemittel enthält noch einen geringen Restgehalt an Lösungsmittel), die unvollkommene Verdampfung durch den Restgehalt an Lösungsmitteln, ein weiterer Druckverlust zwischen Verdampfer und Absorber, eine unvollkommene Austreibung und einen unvollkommenen Wärmeaustausch innerhalb des Lösungskreislaufes und eine unvollkommene Absorption (bewirkt eine Unterkühlung der Lösung) führt zu einer Verringerung der Kälteleistung und ist somit der größte Nachteil.

All dies führt dazu, daß verhältnismäßig viel Energie zugeführt werden muß, um eine entsprechende Kühlwirkung zu erzielen, was sich wie bereits ausgeführt, in einer Verringerung des Wirkungsgrades niederschlägt.

Erste Versuche unter Anwendung von Solarenergie zeigten, daß insbesondere bei Verwendung von Ammoniak als Kältemittel Probleme auftreten, die den Einsatz solcher Kältemaschinen nicht ohne weiteres zulassen. Bei der Verwendung von Ammoniak ist dessen Toxizität ein wesentlicher Nachteil, der die Universalität eines möglichen Einsatzes stark einschränkt. Weiter müssen Druckniveaus beherrscht werden und es ist eine besondere Rektifiziereinrichtung erforderlich, die ebenfalls die Einsatzmöglichkeiten stark einschränken.

So ist aus WO 88/08109 ein Absorptionskältesystem mit einem Sonnenkollektor bekannt, das kontinuierlich arbeiten soll und zu diesem Zweck neben den herkömmlichen Elementen einer Absorptionskältemaschine einen zusätzlichen Behälter zur Aufnahme von Kühlflüssigkeit aufweist, der dem Verdampfer vorgeschaltet ist. Damit ist es jedoch nicht in ausreichendem Maße möglich, den Arbeitsprozeß so zu beeinflussen, daß die Kälteerzeugung auch ohne einen ausreichenden Sonneneinfall auf den Sonnenkollektor kontinuierlich und geregelt erfolgen kann.

Eine andere Ausführung einer Absorptionskältemaschine, die kontinuierlich arbeiten soll, ist in der DE PS 581 957 beschrieben. Wobei hier keine Sonnenenergie für den Betrieb benutzt wird, sondern der Betrieb in bestimmte Zeitbereiche verschoben werden soll, um z.B. günstigere Nachtstromtarife auszunutzen. Bei dieser Absorptionskältemaschine wird ebenfalls flüssiges Kältemittel zwischengespeichert. Dabei erfolgt die Speicherung in im Verdampfer angeordneten Flüssigkeitsbehältern. Eine Regelung ist damit jedoch ebenfalls nicht möglich. Die Kälteerzeugung hängt von der Kapazität des Verdampfers und der Menge des verflüssigten Kältemittels, die erzeugt und die gespeichert werden kann, ab. Bei dieser Kältemaschine wird außerdem vorgeschlagen, Absorptionsmittel zu speichern und zwar ebenfalls unvollkommen in im Absorber aufgenommenen Vorratsräumen.

Eine andere Absorptionskältemaschine ist in DE-OS 27 19 995 beschrieben, die kontinuierlich oder periodisch betrieben werden soll. Diese Kältemaschine ist mittels Trennventilen in einen Hochdruck- und einen Niederdruckteil getrennt, die getrennt oder gemeinsam betrieben werden können. Es werden Speicher für Kältemittel, das Lösungs- bzw. Absorptionsmittel und für kältemittelreiche Lösung eingesetzt. Bei dieser bekannten Absorptionskälteanlage ist es jedoch zwingend erforderlich Pumpen bzw. Verdichter für den Lösungs- und Kühlmitteltransport zu verwenden, die den Wirkungsgrad verschlechtern und einen Standort, der über einen Elektroenergieanschluß oder eine Elektroenergieerzeugung verfügt, erfordert. Außerdem müssen die verschiedenen Trennventile betriebszustandsabhängig betätigt werden, was eine aufwendige Steuerung bzw. Regelung erfordert.

Lösungen für eine kontinuierliche Kälteerzeugung unter Ausnutzung nicht permanent vorhandener Energiequellen, wie dies die Sonnenenergie ist, sind bisher in praktikabler Form für den Einsatz als Inselvariante jedoch noch nicht gefunden worden.

Es ist daher Aufgabe der Erfindung, Absorptionskältemaschinen dahingehend zu verbessern, daß deren Verbrauch an Energie so gering wie möglich gehalten wird und ein kontinuierlicher Betrieb erreichbar ist.

Erfindungsgemäß wird diese Aufgabe durch die im kennzeichnenden Teil des Anspruchs 1 enthaltenen Merkmale für die Vorrichtung und die Merkmale des Anspruchs 5 für das Verfahren gelöst. Vorteilhafte Ausgestaltungen und Weiterbildungen der erfindungsgemäßen Lösung ergeben sich bei Verwendung der in den untergeordneten Ansprüchen genannten Merkmale.

Bei der erfindungsgemäß ausgebildeten Absorptionskältemaschine wird bevorzugt ein Lithiumbromid-Wassergemisch verwendet und dieses Stoffpaar direkt in einem Sonnenkollektor aufgeheizt und zum Sieden gebracht, wobei die Trennung des Kältemittels vom Absorptionsmittel erfolgt und der Transport des Kältemittels, das nur noch einen geringen Anteil der Absorptionslösung aufweist, durch Thermosiphonwirkung zu einem Kondensator erfolgt.

Noch bessere Eigenschaften hat ein Lithiumbromid-Zinkbromid-Wassergemisch, das als Kältemittel verwendet werden kann, dessen Salzkomponenten im Molverhältnis 1:1 gemischt werden. Hierbei kann in einem Temperaturbereich zwischen 0 bis 60°C gearbeitet werden, ohne das die Absorption des Kältemittels zum Erliegen kommt bzw. eine Kristallisation der gespeicherten Lösung auftritt.

Derzeit verwendete Kühlsysteme mit dem Stoffpaar Ammoniak-Wasser könnten nur mit konzentrierenden Sonnenkollektoren betrieben werden, da die untere erforderliche Generatortemperatur mit 170 °C den sinnvollen Betriebsbereich von Vakuumröhren- und Flachkollektoren deutlich übersteigt. Für den Einsatz dieser Kollektortypen muß das Kältemittelpaar mit Wasser verdünnt werden, was eine deutliche Verringerung des Systemwirkungsgrades mit sich bringt.

Das beim Siedevorgang abgetrennte Absorptionsmittel wird hydrostatisch einem Absorptionsmittelspeicher zugeführt und für eine erneute Zuführung in den Kreislauf bereitgehalten. Vor den Kondensator ist ein zusätzlicher Dampfabscheider geschaltet, in dem der Kältemitteldampf nochmals vom Absorptionsmittel getrennt wird und so gesichert ist, daß nur noch ein äußerst geringer Anteil an Absorptionsmittel im Kältemitteldampf enthalten ist.

Der Kondensator ist vorteilhaft als luftgekühltes Rippenrohr ausgeführt. Der Kältemitteldampf kondensiert in diesem aus und wird in flüssiger Form einem als Puffer dienenden Kältemittelspeicher zugeführt. Dem Kältemittelspeicher ist ein ebenfalls als Rippenrohr ausgeführter Verdampfer nachgeschaltet, der über eine Kapillare kontinuierlich mit Kältemittel versorgt werden kann.

Je nach Kältebedarf kann die Dosierung des Kältemittels in den Verdampfer durch Steuerung bzw. Regelung des Druckes, des über die Kapillare zugeführten Kältemittels bzw. über den Füllstand des Kältemittels im Kältemittel speicher beeinflußt werden.

Der Kältemittelspeicher wirkt sich dabei vorteilhaft als Puffer aus und ermöglicht es, auch bei unterbrochener Energiezufuhr, wie dies bei nicht ausreichender Sonneneinstrahlung der Fall sein kann, daß trotzdem eine kontinuierliche Kälteerzeugung gesichert ist. In gleicher Weise wirkt sich der ebenfalls bereits genannte Absorptionsmittelspeicher aus, in dem die Absorptionslösung in ausreichender Menge bereitgehalten wird, um das gespeicherte Kältemittel nach seiner Verdampfung ebenfalls zu absorbieren, ohne daß eine Energiezufuhr erfolgt.

Das aus dem Verdampfer austretende Kältemittel wird ebenso, wie das über eine Blende zuführbare Absorptionsmittel in einen ebenfalls als luftgekühltes Rippenrohr ausgeführten Absorber eingebracht. Die Dosierung des Absorptionsmittels kann mit Hilfe der Blende beziehungsweise über den Füllstand im Absorptionsmittelspeicher geregelt werden. Das Kältemittel-Absorptionslösungsmittelgemisch wird hydrostatisch wieder dem Sonnenkollektor zur Verdampfung zugeführt.

Im weiteren soll unter Desorptionslösung - reiche Absorptionslösung verstanden werden.

Außerdem ist ein Desorptionsmittelspeicher vorhanden, in dem eine Menge einer Desorptionslösung gespeichert ist, die für die Erzeugung von Kältemittel auch dann ausreicht, wenn die Energiezufuhr unterbrochen ist (kein ausreichender Einfall von Sonnenlicht auf den Sonnenkollektor), um trotzdem kontinuierlich zu kühlen. Dabei wird die Konzentration an Kältemittel in der Desorptionslösung so eingestellt, daß auch bei maximaler Sonnenlichteinstrahlung die Kristallisationsgrenze der Desorptionslösung im Sonnenkollektor nicht erreicht wird.

Durch die bevorzugt anzuwendende Luftkühlung, die keine zusätzliche Energie erfordert, wird eine erhöhte Temperatur erreicht, so daß die Gefahr der Kristallisation ansteigt. So treten bei einer Umgebungstemperatur von ca. 35° C im Absorber und Kondensator etwa 50° C auf. Durch den Zusatz von Ethylenglykol im Massenverhältnis von 1:4,5 gegenüber dem Lithiumbromid wird bei Temperaturen zwischen 43 bis 49° C im Kondensator und Absorber, die für den Betrieb der Kältemaschine unerwünschte Kristallisation vermieden.

Die Verflüssigung des Kältemitteldampfes wird in einem als luftgekühltes Rippenrohr ausgeführten Kondensator erreicht. Unter Ausnutzung eines hydrostatischen Druckes wird das Kältemittel kontinuierlich in den als Rohrwendel ausgeführten Verdampfer geführt. Mit dem Verdampfer wird dem Kühlgut Wärme entzogen und so in gewünschter Form Kälte erzeugt.

Auch die in den Absorber geführte Absorptionslösung steht unter einem bestimmten hydrostatischen Druck, wobei der Absorber ebenfalls als luftgekühltes Rippenrohr ausgebildet sein kann.

Nachfolgend soll die Erfindung an einem Ausführungsbeispiel näher beschrieben werden.

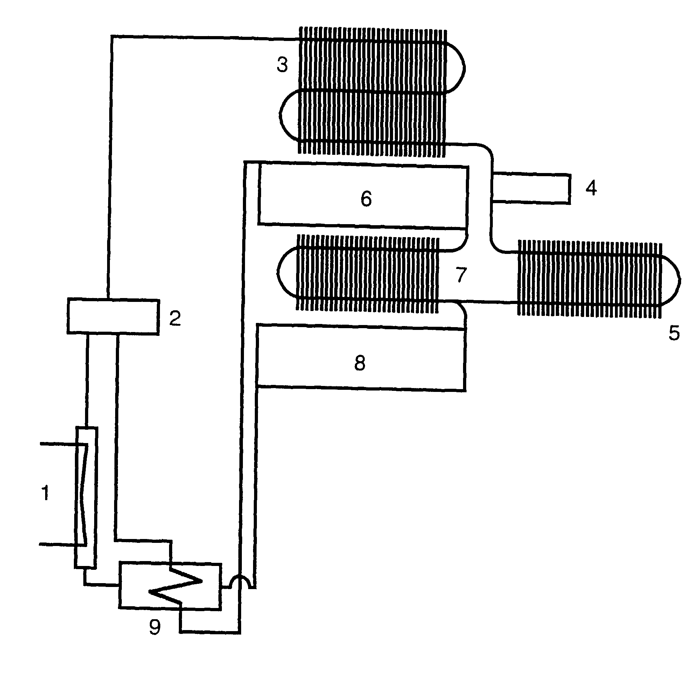

Dabei zeigt die einzige Figur ein Blockschaltbild eines Ausführungsbeispieles für eine erfindungsgemäß ausgebildete Absorptionskältemaschine mit direktem Anschluß an einen Sonnenkollektor.

Bei dem in der Figur gezeigten Ausführungsbeispiel einer erfindungsgemäß ausgebildeten Absorptionskältemaschine wird über Leitungen Absorptionsmittel aus einem Absorptionsmittelspeicher 6 und reiche Absorptionsmittellösung aus einem Desorptionsmittelspeicher 8 über einen Temperaturwechsler 9, mit dem eine Temperatur des Gemisches eingehalten wird, die sichert, daß beide Komponenten in flüssiger Phase vorliegen, in den Sonnenkollektor 1 geführt und die Mischung in diesem zum Sieden gebracht. Dabei wird bevorzugt ein Lithiumbromid-Wassergemisch verwendet, das weder toxisch ist, noch irgendeine Gefährdung der Umwelt bewirkt. Durch den Temperaturwechsler 9 wird eine an Wasser arme Lösung vor dem Eintritt in den Absorptionsmittelspeicher und die an Wasser reiche Lösung vor dem Eintritt in den Austreiber geführt.

Durch Thermosiphonwirkung gelangt die kältemittelarme Absorptionslösung durch aufsteigenden Kältemitteldampf in einen einem Kondensator 3 vorgeschalteten Dampfabscheider 2, in dem nochmals Absorptionsmittel vom Kältemittel abgetrennt wird. Der Kältemitteldampf wird im Kondensator 3 verflüssigt und gelangt in dieser Form in einen dem Verdampfer 5 vorgeschalteten Kältemittelspeicher 4, der als Puffer für den Fall dient, daß die auf den Sonnenkollektor 1 gelangende Sonnenlichtenergie nicht ausreichend ist, um einen kontinuierlichen Betrieb der Kältemaschine zu sichern.

Die Kühltemperatur kann in der Form geregelt werden, daß der Druck bzw. der Füllstand im Kältemittelspeicher 4 entsprechend beeinflußt wird. Dabei muß der Kältemittelspeicher 4 ausreichend isoliert und dimensioniert sein, um eine Menge an Kältemittel aufnehmen zu können, die ausreicht um dieses Erfordernis zu erfüllen.

Das aus dem Kältemittelspeicher 4 zugeführte flüssige Kältemittel kühlt sich beim Entspannen im Verdampfer 5 stark ab und es kann Wärme von außen aufgenommen werden. Der entstehende Dampf strömt in einen nachgeschalteten Absorber 7, in dem auch eine Restentspannung erfolgen kann. Der Absorber 7 ist über Leitungen mit dem Absorptionsmittelspeicher 6 und dem Speicher 8 für reiche Absorptionsmittellösung verbunden. Die im Absorber 7 entstehende Wärme kann an die Umgebung abgegeben werden.

Im übrigen ist der Kreislauf mit weiteren Leitungen geschlossen, und das Lithiumbromid-Wassergemisch kann erneut über den Sonnenkollektor 1 geführt und erwärmt werden, so daß ein geschlossener Kreislauf gebildet ist.

## Patentansprüche

1. Absorptionskältemaschine mit einem Kondensator, Verdampfer, einem Absorber durch die ein Kältemittel-Absorptionsmittelgemisch im Kreislauf führbar ist, bei der mindestens ein Sonnenkollektor (1) zur Beheizung bis oberhalb des Kältemittelsiedepunktes zur Austreibung des Kältemittels sowie ein Kältemittelspeicher (4) im Anschluß an den Kondensator (3) in den Kreislauf geschaltet ist und im Kältemittelspeicher (4) flüssiges mit einem erhöhten Druck beaufschlagtes Kältemittel aufgenommen ist und an den Absorber (7) ein Absorptionsmittelspeicher (6) und ein Speicher für reiche Absorptionsmittellösung (8) angeschlossen sind,
dadurch gekennzeichnet, daß am Kältemittelspeicher (4) eine das Kältemittel dosierende, eine füllstandsabhängig wirkende hydrostatische Regelung im Zusammenwirken mit einer zwischen Kältemittelspeicher (4) und Verdampfer (5) angeordneten Kapillare vorhanden ist und eine Dosierung von Absorptionsmittel mittels einer Blende oder über den Füllstand im Absorptionsmittelspeicher (6) durchführbar ist.

2. Absorptionskältemaschine nach Anspruch 1, dadurch gekennzeichnet, daß dem Kondensator (3) ein Dampfabscheider (2) vorgeschaltet ist.

3. Absorptionskältemaschine nach Anspruch 1 oder 2, dadurch gekennzeichnet, daß der Speicher (8) für reiche Absorptionsmittellösung, eine Menge reicher Absorptionslösung aufnimmt, die einen kontinuierlichen Betrieb ermöglicht.

4. Absorptionskältemaschine nach mindestens einem der Ansprüche von 1 bis 3, dadurch gekennzeichnet, daß der Kondensator (3), der Verdampfer (5) und/oder der Absorber (7) als luftgekühltes Rippenrohr ausgebildet ist/sind.

5. Verfahren zum Betreiben einer Absorptionskältemaschine nach Anspruch 1, dadurch gekennzeichnet, daß das Kältemittel-Absorptionsmittelgemisch direkt im Sonnenkollektor (1) beheizt und der Transport kältemittelarmer Absorptionslösung durch Thermosiphonwirkung des Kältemitteldampfers aus dem Sonnenkollektor (1) oder Austreiber in den Kondensator (3) durchgeführt, flüssiges Kältemittel in einem Kältemittelspeicher (4) gespeichert und füllstandsabhängig hydrostatisch geregelt vom Kältemittelspeicher (4) dem Verdampfer (5) dosiert zugeführt wird und Absorptionsmittel aus dem Absorptionsmittelspeicher (6) mittels einer Blende zum Absorber (7) und/oder kältemittelreiches Gemisch in den Sonnenkollektor (1) hydrostatisch gefördert wird/werden.

6. Verfahren nach Anspruch 5, dadurch gekennzeichnet, daß ein Lithiumbromid-Wassergemisch verwendet wird.

7. Verfahren nach einem der Ansprüche 5 und 6, dadurch gekennzeichnet, daß ein Lithiumbromid-Zinkbromid-Wassergemisch verwendet wird, dessen Molverhältnis der Salzkomponenten bei 1:1 liegt.

8. Verfahren nach Anspruch 6, dadurch gekennzeichnet, daß dem Kältemittelgemisch Ethylenglykol zugegeben wird.

9. Verfahren nach Anspruch 8, dadurch gekennzeichnet, daß Ethylenglykol im Massenverhältnis 1 zu 4,5 gegenüber dem Lithiumbromid zugegeben wird.

10. Verfahren nach einem der Ansprüche 5 bis 9, dadurch gekennzeichnet, daß die Konzentration des Kältemittels im Speicher (8) für reiche Absorptionslösung so eingestellt wird, daß bei maximaler Sonneneinstrahlung die Kristallisationsgrenze der reichen Absorptionsmittellösung im Sonnenkollektor (1) oder Austreiber nicht erreicht wird.

## Claims

1. An absorption refrigerating machine with a condenser, evaporator, an absorber through which a refrigerant-absorption medium mixture can be passed in the circuit, in which at least one solar collector (1) for heating to above the boiling point of the refrigerant for driving out the refrigerant as well as a refrigerant reservoir (4) following the condenser (3) are connected in the circuit and liquid refrigerant under enhanced pressure is received in the refrigerant reservoir (4), and an absorption medium reservoir (6) and a reservoir for rich absorption medium solution (8) are connected to the absorber (7), characterized in that a hydrostatic regulation operating in dependence on the filling level, metering the refrigerant, is provided at the refrigerant reservoir (4), cooperating with a capillary arranged between the refrigerant reservoir (4) and the evaporator (5) and metering can be effected by means of an orifice or through the filling level in the absorption medium reservoir (6).

2. An absorption refrigerating machine according to claim 1, characterized in that a vapour separator (2) is connected ahead of the condenser (3).

3. An absorption refrigerating machine according to claim 1 or 2, characterized in that the reservoir (8) for rich absorption medium solution receives an amount of rich absorption medium solution which facilitates continuous operation.

4. An absorption refrigerating machine according to at least one of claims 1 to 3, characterized in that the condenser (3), the evaporator (5) and/or the absorber (7) is/are formed as an air-cooled finned tube.

5. A method of operating an absorption refrigerating machine according to claim 1, characterized in that the refrigerant-absorption medium mixture is heated directly in the solar collector (11) and the transport of absorption solution low in refrigerant is effected from the solar collector (1) or generator to the condenser (3) through thermosiphon action of the refrigerant evaporator, liquid refrigerant stored in a refrigerant reservoir (4) is metered from the refrigerant reservoir (4) to the evaporator (5), regulated hydrostatically in dependence on the filling level, and absorption medium is fed hydrostatically by means of an orifice to the absorber (7) and/or mixture rich in refrigerant is fed hydrostatically into the solar collector (1).

6. A method according to claim 5, characterized in that a lithium bromide and water mixture is used.

7. A method according to either claim 5 or 6, characterized in that a lithium bromide and zinc bromide and water mixture is used, whose molar ratio of the salt components lies at 1:1.

8. A method according to claim 5, characterized in that ethylene glycol is added to the refrigerant mixture.

9. A method according to claim 8, characterized in that ethylene glycol is added in the ratio by mass of 1 to 4.5 relative to the lithium bromide.

10. A method according to any of claims 5 to 9, characterized in that the concentration of the refrigerant in the reservoir (8) for rich absorption solution is so adjusted that the crystallisation limit of the rich absorption medium solution is not reached in the solar collector (1) or generator at maximum solar irradiation.

## Revendications

1. Machine frigorifique à absorption comprenant un condenseur, un évaporateur, un absorbeur au moyen duquel on peut faire passer un mélange de fluide réfrigérant et de produit absorbant dans le circuit, dans laquelle un collecteur solaire (1) est monté dans le circuit, pour chauffer jusqu'au-dessus du point d'ébullition du fluide réfrigérant pour expulser le fluide réfrigérant, ainsi qu'un accumulateur (4) de fluide réfrigérant à la suite du condenseur (3) et dans lequel du fluide réfrigérant liquide, mis sous une pression accrue, est recueilli dans l'accumulateur de fluide réfrigérant (4), et un accumulateur de produit absorbant (6) et un accumulateur pour une solution riche de produit absorbant (8) sont raccordés à l'absorbeur (7), caractérisée en ce que
- il y a sur l'accumulateur de fluide réfrigérant (4) un système de régulation hydrostatique, qui dose le fluide réfrigérant, système qui agit en fonction du niveau de remplissage, en coopération avec un circuit capillaire disposé entre l'accumulateur de fluide réfrigérant (4) et l'évaporateur, et
- l'on peut effectuer un dosage du produit absorbant au moyen d'un diaphragme ou au moyen du niveau de remplissage dans l'accumulateur (6) du produit absorbant.

2. Machine frigorifique à absorption selon la revendication 1,
caractérisée en ce qu'
on monte en amont du condenseur (3) un séparateur de vapeur (2).

3. Machine frigorifique à absorption selon la revendication 1 ou 2,
caractérisée en ce que
l'accumulateur (8) recueille pour une solution riche de produit absorbant une quantité de solution d'absorption plus riche, qui permet d'avoir un fonctionnement continu.

4. Machine frigorifique à absorption selon au moins l'une des revendications 1 à 3,
caractérisée en ce que
le condenseur (3), l'évaporateur (5) et/ou l'absorbeur (7) est/sont constitué(s) sous la forme d'un tube à ailettes, refroidi par air.

5. Procédé pour faire fonctionner une machine frigorifique à absorption selon la revendication 1,
caractérisée en ce qu'
on chauffe le mélange de fluide réfrigérant et de produit absorbant directement dans le collecteur solaire (1) et l'on effectue le transport de la solution de produit absorbant pauvre en fluide réfrigérant grâce à l'action d'un thermosiphon sur la vapeur du fluide réfrigérant à partir du collecteur solaire (1) ou de l'extracteur dans le condenseur (3), on stocke du fluide réfrigérant liquide dans un accumulateur (4) de fluide réfrigérant et on l'amène de façon dosée de l'accumulateur de fluide réfrigérant (4) à l'évaporateur (5) en l'ayant réglé de façon hydrostatique en fonction du niveau du remplissage, et on transfert de façon hydrostatique du produit absorbant et/ou du mélange riche en fluide réfrigérant, à partir de l'accumulateur de produit absorbant (6) au moyen d'un diaphragme vers l'absorbeur (7) dans le collecteur solaire (1).

6. Procédé selon ia revendication 5,
caractérisé en ce qu'
on utilise un mélange de bromure de lithium et d'eau.

7. Procédé selon l'une des revendications 5 et 6,
caractérisé en ce qu'
on utilise un mélange de bromure de lithium et d'eau, dont le rapport molaire des sels qui le composent est de 1:1.

8. Procédé selon la revendication 6,
caractérisé en ce que
l'on ajoute au mélange de fluide réfrigérant de l'éthylène glycol.

9. Procédé selon la revendication 8,
caractérisé en ce qu'
on ajoute l'éthylène glycol dans la proportion en poids de 1 à 4,5 par rapport au bromure de lithium.

10. Procédé selon l'une des revendications 5 à 9,
caractérisé en ce que
la concentration du produit réfrigérant dans l'accumulateur (8) est réglée pour la solution riche d'absorption de telle sorte que lors d'un rayonnement solaire maximal la limite de cristallisation de la solution riche du produit absorbant ne soit pas atteinte dans le collecteur solaire (1) ni l'extracteur.
